# EUROPEAN PATENT SPECIFICATION

(11) **EP 2 175 339 B1**
(45) Date of publication and mention of the grant of the patent: **16.11.2011**
(21) Application number: 09161618.5
(22) Date of filing: 01.06.2009
(51) Int. Cl.: G05D 11/02, B01F 5/06, B01F 7/16, B29B 7/00, C08G 18/08

(54) **Device for preparing plastic mixture and method for preparing plastic mixture**
Vorrichtung zur Zubereitung einer Kunststoffmischung und Verfahren zur Herstellung der Kunststoffmischung
Dispositif de préparation de mélange plastique et procédé de préparation de mélange plastique

(30) Priority: 13.10.2008 PL 38626808
(43) Date of publication of application: 14.04.2010
(73) Proprietor: NTB Grupa Spolka z ograniczona odpowiedzialnoscia, 03-013 Warszawa (PL)
(72) Inventor: Budzikowski, Andrzej, 03-905, Warszawa (PL); Winiarski, Piotr, 30-040, Krakow (PL); Cholewa, Arkadiusz, 41-200 Sosnowiec (PL)
(74) Representative: Hudy, Ludwik

(56) References cited:
- EP-A- 1 029 652
- US-A- 4 074 363
- US-A- 4 202 635
- US-A- 5 472 990
- US-A- 5 938 079

## Description

The invention concerns a device for preparing plastic mixture, in particular a mixture based on epoxide, polyurethane and other resins, used in particular for the installation and renovation of railway lines, tram lines and subway lines as well as railway and road crossings, aprons, roads and motorways, and also for joining construction elements and sealing the joints between them. The invention relates also to the method of preparing plastic mixture, in particular a mixture based on epoxide, polyurethane and other resins, and pouring the mixture onto a site prepared in advance.

Mixing various components is present in almost all technological processes, both in the chemical and machine-building industry as well as in the construction industry. The problems which need to be solved when preparing a mixture relate in particular to providing mixture components in appropriate proportions, maintaining proper temperature during the mixing process, and also to achieving homogenous consistency of the mixture ready for further use. In the European patent application no. EP 0029 072 A1 "*Verfahren und Mischer zum kontinuierlichen Mischen von Stoffen, insbesondere Kunststoffen"* has been disclosed a process and mixer designed for continuous mixing of substances, in particular plastics, provided with a container to which the individual components, as well as the partially blended mixture, re-supplied to the container where the substances are mixed from an additional outlet via an additional device, are supplied.

In addition, in the European patent application no. EP 0 900 812 A1 *"Verfahren zur kontuierlichen Herstellung von thermoplstisch verarbeitbaren Polyurethanen in einem Zweiwellenextrude mit, spezieller Tempearturführung"* has been disclosed a process of continuous production of thermoplastically workable polyurethanes in a double-shaft mixer, performed under quasiadiabatic conditions.

Furthermore, in the European patent application no EP 0489 611 A2 "Two-component polyurethane sealants, a process for, preparing them and their use for bonding a windscreen" have been disclosed polyurethane sealants comprising a polyurethane component containing a polyurethane prepolymer having free isocyanate groups, a curing agent and diluent. The mixing process carried out in a static mixer results in a mixture used for bonding window screens.

In turn, publication of European Patent Application No. EP 1 029 652 A1 "Dispositif mélanger sous vide pour la coulée de matériaux plastiques polymérisabies" teaches a control valve which places the mixing chamber volume under vacuum, before admission of the base materials, when the shut-off valve is in the closed position. The shut-off valve includes a non-return valve biased to open automatically as soon as the internal pressure exceeds a preset threshold. This valve is held closed resiliently, and/or by reduced pressure in the mixing chamber. Furthermore, this publication refers to a use of control system to control the mixing process and casting process and comprises a closing means designed to close or open an outlet orifice respectively before and during casting or of reactive mixture, an a control valve for deaeration.

Publication of US Patent Specification No. US 5,938,079 A "Dispensing head for two-component foam with shutoff" teaches a mixing and dispensing head which is designed for use in a two component foam system. The head includes a body having a mixing chamber formed therein along a longitudinal axis and having a dispensing channel downstream of the mixing chamber. At least two supply portions are connected to the body, with each of the supply portions for supplying one of the components to the mixing chamber at a component entry location. Each of the component entry locations is longitudinally offset from each other. A rotating mixing member within the mixing chamber for mixing the components together to form the foam product. The mixing member includes a cylindrical core having indentations in the core and having angled vanes extending from the core. A shutoff portion is provided for stopping the flow of product from the dispensing channel.

Furthermore, publication of US Patent Specification No. US 5,472,990 A "Method and apparatus for nucleation of polyurethane foam which results in self-adhering microcellular foam" refers to an apparatus and method for producing foam polyurethane which incorporates an apparatus for mixing a nucleating gas into the polyol fraction and finally dispersing the nucleating gas prior to mixing the polyol fraction with the isocyanate fraction. The apparatus and method produce a very fine and uniform microcellular structure in the foam.

In turn, publication of US Patent Specification No. US 4,202,635 A "Portable device for mixing two materials" teaches a device with a separate container for each of the two materials with each container having means to discharge the contents of the container under pressure through a discharge tube, a mixing tube of flexible material having a discharge end and an inlet end with a mixing element received in the mixing tube and extending between the ends, a nozzle attached to the discharge end, and coupling means attached to the inlet end for connecting the discharge tubes of the containers thereto.

The mixing processes known to date have a drawback in that the proportions of the components are not strictly preserved during the mixing process.

The invention concerns a device for preparing plastic mixture, consisting of at least two containers holding different plastic mixture components, especially epoxide, polyurethane and other resins as well as a curing agent, transporting lines transporting different components and pumps generating flow of the components assigned to respective transporting lines transporting separately the components, taken from assigned containers, where at least one of the components is a plastic component, to a mixing device where the components are mixed into homogeneous plastic mixture and their flow is controlled by a control system. In the device according to the invention, the pumps generating flow of the components are rate-adjustable pumps generating flow of the components assigned to respective transporting lines with flow meters measuring the volume of each flowing component on a continuous basis, whose indications are sent to the control system regulating the volume of each component flowing to the mixing device where the components of specific proportions are,mixed in order to achieve a substantially homogenous plastic mixture.

A mixing device according to the invention can be a mixing head with a dynamic-mixing chamber, in which there is a rotational stirrer, and, placed behind the dynamic-mixing chamber, a static-mixing chamber terminated with an outlet through which, the plastic mixture is delivered outside.

Within each line transporting components, whose volume is measured on a continuous basis, there can be a switching valve redirecting the flow of a respective component to the assigned container after passing through the flow meters measuring the volume of each flowing component, and at the same time preventing the respective component from flowing into the mixing device.

Preferably, the control system is able to detect stabilised parameters of the mixture composition and is able to switch flow of the components from the internal cycle into an external cycle if conditions for proper operation and correct proportions of the components are reached and is able to adjust the flow of the components in respect to pre-set volumetric or weight ratios of the components in the plastic mixture.

Advantageously, within each line transporting components, whose volume is measured on a continuous basis, there is established a closed cycle running from the container holding the component assigned to a given transporting line, a pump generating the flow of the components in the transporting line, a flow meter measuring the volume of the flowing component on a continuous basis, a valve connected to the return line, connected to the container, redirecting the component back to the container from which it has been supplied and at the same time preventing the component from flowing via the transporting line to the mixing device, and within each line transporting components, whose volume is measured on a continuous basis, there is established an open cycle running from the container holding the component assigned to a given transporting line, a pump generating the flow of the components in the transporting line, a flow meter measuring the volume of the flowing component on a continuous basis, and a valve connected to the transporting line, connected to the mixing device, directing the component to the mixing device and at the same preventing the component from flowing to the return line, while the container holding the component assigned to a given transporting line, the pump generating the flow of the components in the transporting line, the flow meter measuring the volume of the flowing component on a continuous basis, which belong to the closed cycle, are at the same time the container holding the component assigned to a given transporting line, the pump generating the flow of the components in the transporting line, the flow meter measuring the volume of the flowing component on a continuous basis, in the open cycle.

The rotational stirrer can be powered by a speed-adjustable motor, or engine. The segments of the rotational stirrer can be shaped as rectangular plates whose two opposite edges are inflected towards each other, in the planes substantially perpendicular to the axis of the rectangular plate, at an angle of about 90°, while two adjoining plates are rigidly joined by edges being in stably contact, and the angle measured in the plane substantially perpendicular to the plate axis between the edges of the adjoining plates is about 90°.

It is recommended that the mixing head be provided with a cleaning nozzle, to which cleaning agent and compressed air are supplied, and/or valves preventing the components from flowing into the mixing area.

In at least one of the component containers, there can be established a chamber holding inert gas which prevents the component held in the container from coming into contact with the environment.

In one of the preferred embodiments, the mixing device can at the same time be a device supplying the plastic mixture to a pre-determined site.

Furthermore, the invention relates to the process of preparing a mixture from plastics held in at least two containers with different components of plastic, especially epoxide, polyurethane and other resins as well as a curing agent, supplied via the transporting lines where flow of the component assigned to each transporting line is generated by a pump from containers to a mixing device where the components are mixed into substantially homogeneous plastic mixture and their flow is controlled by a control system. In accordance with the concept of the invention, the flow of the component assigned to each transporting line is generated by means of a rate-adjustable pump and measured on a continuous basis by means of flow meters whose indications are sent to the control system providing regulation in real-time of the volume of each component flowing to the mixing device where the components supplied in pre-defined volumes are mixed in order to achieve a substantially homogenous plastic mixture, consistent with the pre-determined proportions of the components in the ready mixture.

Advantageously, in the mode for determining the device working parameters and composition of the mixture in each line transporting the components, whose volume is measured on a continuous basis, a closed cycle, running from the container holding the component assigned to a given transporting line, is established by means of a valve connected to the return line, connected to the container, and the flow of the component is redirected to the container from which it has been supplied, and at the same time the component is prevented from flowing through the transporting line to the mixing device, while the pump is used to generate the flow of the components in the transporting line through the flow meter measuring the volume of the flowing component on a continuous basis, adjusting at the same time the proportions of the components transported within a given closed cycle until stable flow of the components in pre-defined volumes resulting from the pre-determined proportions of the components in the ready-to-pour mixture, is achieved, and subsequently, in the operating mode, by means of the valve connected to the transporting line, connected to the mixing device, the flow of the components is directed to the container and the pump is used to generate the flow of the components in the transporting line through the flow meters to the mixing device, and at the same time the component is prevented from flowing to the return line, and the flow of components in pre-defined volumes resulting from the pre-determined proportions of the components in the mixture is monitored on a' continuous basis, while the container holding the component assigned to a given transporting line, the pump generating the flow of the components in the transporting line, the flow meter measuring the volume of the flowing component on a continuous bases, which belong to the internal or closed cycle, are also the container for the component assigned to a given transporting line, the pump generating the flow of the components in a given transporting line, the flow meter measuring the volume of the flowing component on a continuous basis, in the open cycle, in which the component is supplied to the mixing device.

Furthermore, it is advantageous if in the cleaning mode of the mixing device, either the pumps generating the flow of the components in the transporting lines are deactivated or the internal or closed cycle, running from the container holding the component assigned to a given transporting line, is reset by means of the valve connected to the return line, connected to the container, and the pump is used to redirect the flow of the components to the container from which the components have been supplied, and at the same time the components are prevented from flowing through the transporting line to the mixing device, and the cut-off valves are used to stop the component from flowing into the mixing area, while subsequently the mixing chamber is supplied with the cleaning agent and compressed air through the cleaning nozzle, and the component residues are removed through the outlet of the mixing device together with the cleaning agent and compressed air.

The exemplary embodiment of the invention is illustrated by way of drawings in which
Fig. 1 shows a device for preparing a plastic mixture, in particular based on polyurethane or epoxide resins, placed on an undercarriage;
Figs. 2 and 3 show a general block diagram of the device for preparing a mixture based on polyurethane or epoxide resins;
Fig. 4 shows a general block diagram of the device for pouring polyurethane resins;
Fig. 5 shows a block diagram of an inert-gas pneumatic system;
Fig. 6 shows a block diagram of the pneumatic system for lifting the platform holding pump engines and the pre-mixer;
Fig. 7 shows a block diagram of the mixing head cleaning system;
Fig. 8 shows a rotational stirrer, separated into individual components, in exploded view; and
Fig. 9 shows a block diagram of the mixture preparation and pouring process.

The device for preparing plastic mixtures and pouring liquid plastics, in particular polyurethane resins or epoxide resins or another resins, for which a solution according to the invention can be adapted, consists inter alia of the system for feeding, selection and monitoring of mixing proportions, system for mixing and pouring resins, automatic status control system, cleaning system, system preventing crystallization of the curing agent, material preheating system, pneumatic system and undercarriage of the device.

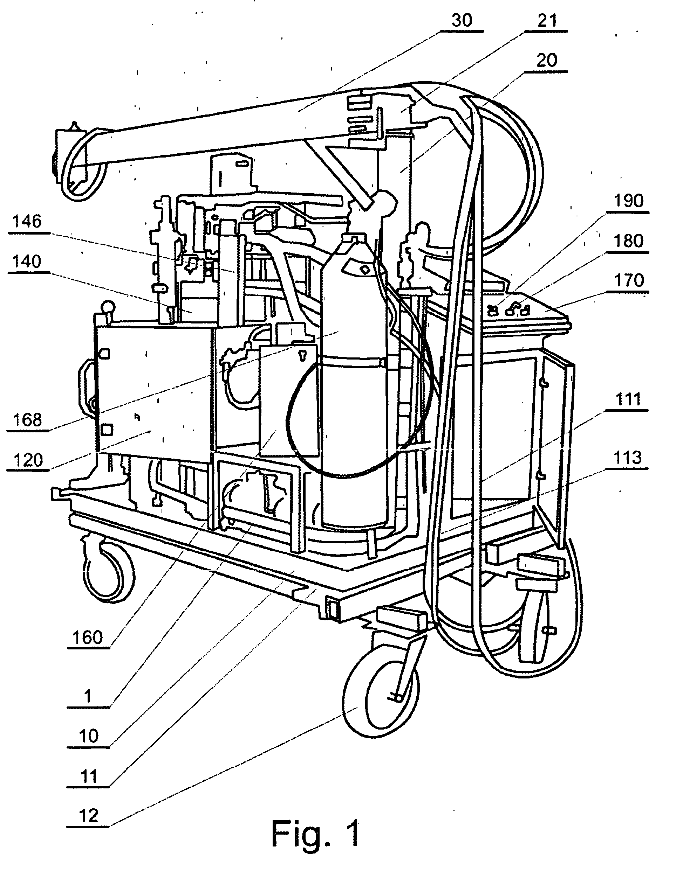

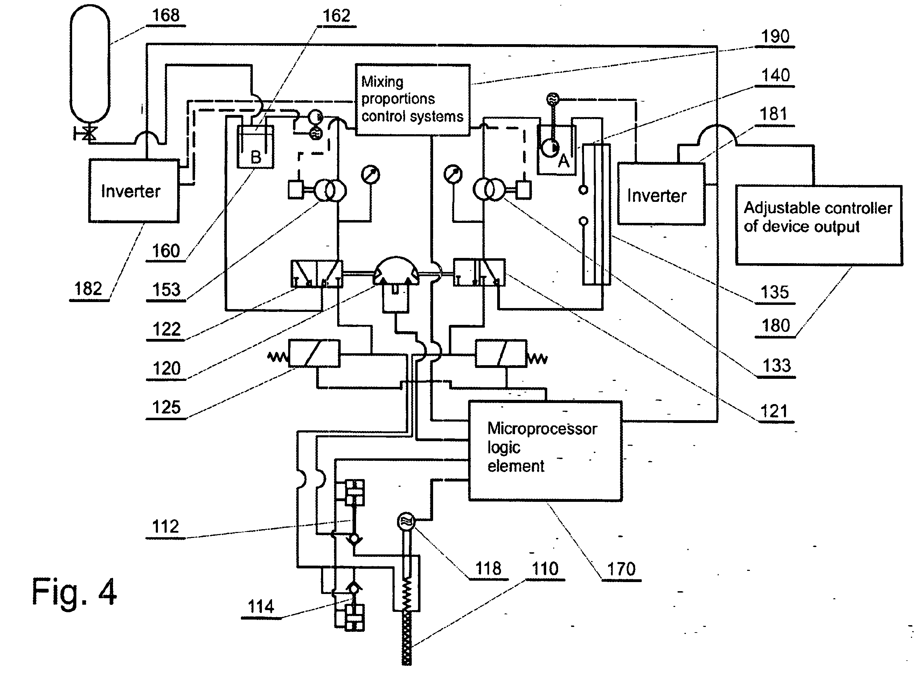

The device for preparing plastic mixtures, in particular based on polyurethane resins, is shown in a simplified form in Figs. 1-4 where the elements performing the same function are referred to with an identical number in all the figures. Even though the embodiment is presented on the example of a device for preparing plastic mixtures, in particular based on polyurethane resins, a solution according to the invention can be applied whenever it is necessary to preserve specific proportions of the components in the mixture. To clarify the terminology used in the description, a plastic mixture is a mixture composed of at least one plastic, for example polyurethane, epoxide or other resins, and at least one substance, for example a curing agent, which modifies at least one physicochemical property of the plastic present in the plastic mixture. Well known mixtures made by firm SIKA, Germany, that can be mixed by the device for preparing plastic mixtures according to present invention are, for example, Sikafloor 156 having density 1.1 kg/l and a component ratio of epoxide resin A : curing agent B = 3:1, Sikafloor 261 having density 1.1 kg/l and a component ratio of epoxide resin A : curing agent B = 3:1, Elastomeric TF having density 1.2 kg/l and a component ratio of polyurethane resin A : curing agent B = 4:6, Sikafloor 357 having density 1.28 kg/l and a component ratio of polyurethane resin A : curing agent B = 2.33:1.

Fig. 1 shows the device 1 for pouring polyurethane resins, whose systems are installed on an undercarriage, such as e.g. platform truck 10 with frame 11 provided with rotatable and turnable wheels 12. The wheel spacing may be changed and adapted to the conditions of the construction or renovation of track superstructures, aprons and motorways. The main function of the undercarriage is to bring the device as close as possible to the working site, i.e. as close as possible to the pouring site. Due to the adequate undercarriage structure, it is possible to operate the undercarriage in very narrow and inconvenient places, which is made possible by the adjustable wheel spacing. Furthermore, the presented structure of the undercarriage enables transport over rails as the undercarriage has appropriate ground clearance and good manoeuverability resulting from turn of all four wheels.

The platform truck 10 supports the column 20 with the collapsible jib 30, fixed to the column 20 as an articulated or revolving arm by means of the bearing head 21 or a set of bearings. Fig. 1 shows the component A container 140 with platform 146 which supports engines of the pump and pre-mixer, the component B container 160 with an inert-gas chamber, connected at the top with an inert-gas tank, e.g. nitrogen cylinder, installed pumps, which pump the components A and B, together with a set of valves 120 and transporting lines 111, 113, and the control system 170 of the device.

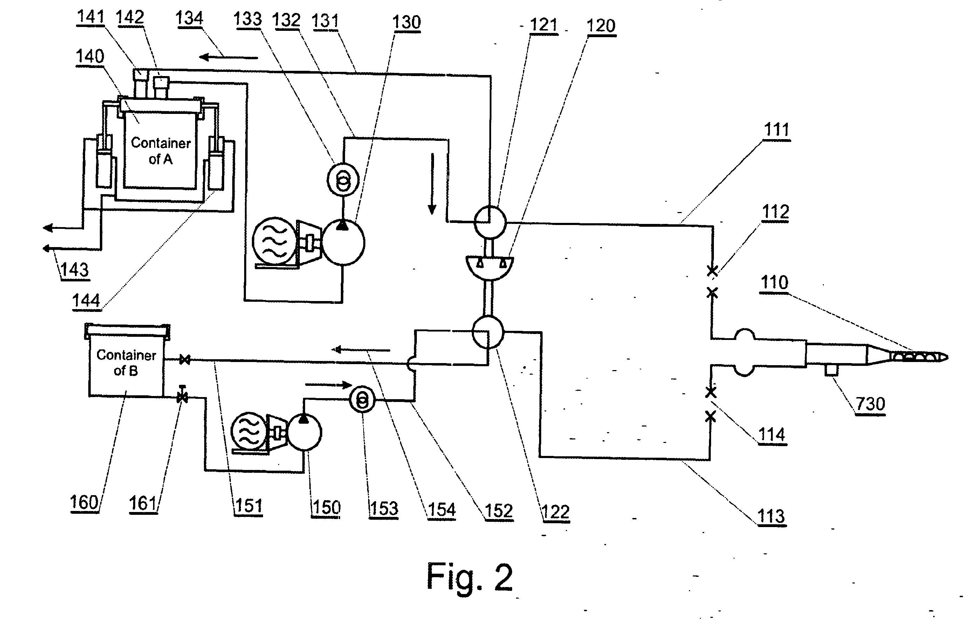

Further constructional details of the device for preparing the mixture and pouring polyurethane resins are shown in Figs. 2 - 4. One of the systems, referred to hereinabove and shown in these figures, is the system for feeding, selection and monitoring of mixing proportions which consists of at least two containers 140, 160 for the components of the polyurethane resin mixture, where the container 140 for resin, hereinafter referred to as the component A, can be a drum with storage capacity of 200 liters, placed on a rotating platform which facilitates loading of full containers and their removal when empty by means of a set of actuators 144 controlled via the line 143. The drum can be used as a shipping container, supplied by the resin producer. On the other hand, the container 160 for the curing agent is a gas-tight holder with storage capacity,of e.g. 42 liters, where the curing agent, hereinafter, referred to as component B, is poured from the containers supplied by the producer. The upper section of the container 160 for the curing agent is designated for the inert-gas chamber 162 which is connected via a cut-off valve, to the inert-gas container 168, e.g. nitrogen cylinder. The resin container, 140 supports the resin-suction nozzle 142, connected to the resin feeding line whose other end is connected to the pump inlet 130. The pump outlet 130 is connected to the flow meter 133 which continuously sends real-time data on the recorded volume of the flowing resin, for example polyurethane, epoxide or another resin, hereinabove defined as the component A. Next, the flow meter outlet is connected to the heated, at least partially, feeding line 132 of the component A, whose one end is connected to the control valve 121, e.g. a 3-way valve, included in the main valve 120 redirecting resin either to the return line 131, terminated with the return nozzle 141 placed in the resin container 140, or to the mixing head 110 with the motor or engine 118, which means that in each line transporting components A, B, whose volume is measured on a continuous basis, there is a switching valve 121, 122 redirecting the flow of a respective component A, B to the assigned container 140, 160 after passing through the flow meters, 133, 153 respectively, which measure the volume of each flowing component A, B, and at the same time preventing the respective component from flowing to the mixing device. Thus, when the flow has been redirected from an internal or closed cycle to an external or open cycle or from the open cycle to the closed cycle, the control system 190 regulating the proportions of the components in the mixture can be adapted to adjust the flow of individual components A, B to the pre-determined proportions of the components in the mixture. The control system 190 is a track control feedback system, i.e. signals from the flow meters 133, 153 are sent to the control system 190 which accordingly to the flow meter indications adjusts the rate of pumps 130, 150, which in turn affects the signal sent to the control system.

To increase the quality of mixing and mixture applying, the device has been provided within the transporting line of resin, i.e. component A, with the heater 135 which is one of the elements of the component heating system. The heater 135 is controlled by means of a dedicated temperature controller, under continuous monitoring of both the temperature controller and the microprocessor logic element 170. Heating takes place at mild temperatures and covers substantial length, e.g. three meters, as recommended by the resin producer.

The transporting cycle of the curing agent is similar to the resin transporting cycle and comprises at least the curing agent container 160, a feeding line with the valve 161, the pump 150, the flow meter 153 installed within the feeding line 152, the main 3-way valve 122 redirecting the curing agent either to the return line 151, terminated with an outlet to the curing agent container 160, or to the stirrer 110.

The pumps 130, 150 delivering the components A and B from the containers 140, 160 have been specially selected, and their performance specifications allow wide-ranged and precise control of their rate of delivery, which results in correct proportions of the components A and B in the final mixture, to which, if necessary, other components can also be added. The information necessary to determine the composition of the final mixture is sent to the mixing proportions control system 190 and to the microprocessor logic element 170, which after appropriate logic processing generates an appropriate signal for the inverters 181, 182 to achieve the correct and pre-programmed proportions of the components in the mixture. When the device has been switched on, the components, having passed through the flow meters 133, 153, are delivered to the 3 way valves 121, 122 of the main valve 120, where in the first operating mode the valve is set for the internal or closed cycle, also referred to as the small cycle, in which the unmixed components A and B are returned to the containers from which they have been supplied, as indicated by the arrows 134, 154 in Fig. 2.

In the mode when the unmixed components A and B are returned to the containers, 140 and 160 respectively, the exact volumes are set for the components A and B delivered through pumps 130, 150, whose rate of delivery of the transported components is adjusted to the required proportions of the components A and B in the mixture used e.g. to caulk grooves between concrete slabs or areas around rails, or joints between other elements.

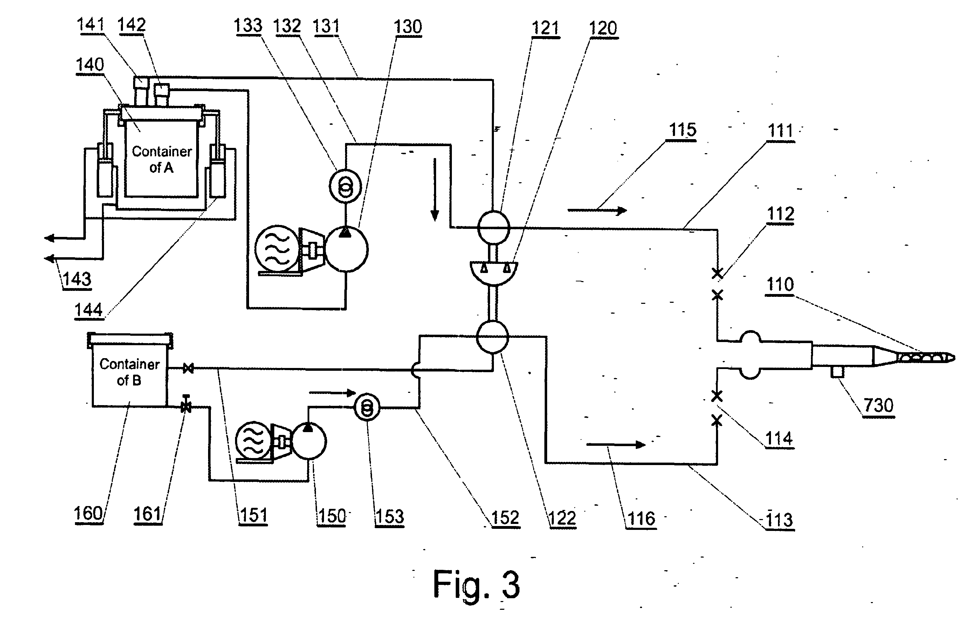

When the device for preparing mixtures and pouring polyurethane resins reaches all the conditions necessary to guarantee proper operation of the device and correct proportions of the components in the mixture, the microprocessor logic element 170, which is a component of the resin mixing and pouring'system and which monitors device operations, allows switching the main valve 120 from the closed cycle to the open cycle, also referred to as the external cycle. The valve is switched over after a signal received from the device personnel, when the operator is ready to pour the mixture onto a prepared site. The procedure is carried out by means of the 3-way valves 121, 122 which are switched over simultaneously with the valves of the mixing head 110. The mixture components flow separately through the system of the transporting lines 111, 113, e.g. flexible hoses and pipes, as indicated by the arrows, 115 and 116 respectively, in Fig. 3, and service connections 112, 114 to the mixing head 110. There, after passing through the cut-off valves, they are delivered to one dynamic-mixing chamber. In the chamber, the components are mixed by a stirrer of special construction, which guarantees proper and homogenous blending of the mixture components. Behind the mixing chamber, there is a nozzle which performs two functions, i.e. provides additional static mixing and ensures that resin is supplied to the appropriate place. A device operator can at any time return to the closed cycle mode and terminate mixture feeding by pressing an appropriate button.

The device for preparing mixtures and pouring plastics, especially polyurethane resins, has a specially programmed microprocessor logic element 170, the so called microcontroller, shown in Fig, 4, which is a part of the device status automatic control system which controls and monitors operations of the device on a continuous basis. The device control involves verification of such parameters as the correct proportions of the mixture components, proper pressure values for individual components, appropriate temperature of the components during device operation, component content in the containers, proper position of the component A submersible pump, correct power supply to the device and condition of the electrical and logical safety devices. On the other hand, in relation to the device control, the microprocessor logic element 170, together with the mixing proportions control system 190 and adjustable controller 180 of the device output, controls switching over of both the main valves and the mixing head, activation of the programmable components, including the stirrer engine, pump actuators, as well as switching on/off of the entire device. If any of the above parameters is found to be incorrect, the control system disables device operation by blocking device activation or disenabling the closed-to-open cycle switchover. All the parameters are additionally stored in the device, internal memory for maintenance purposes and to guarantee good quality of the performed casting.

To summarize, the device for preparing plastic mixtures according to the invention, consists of at least two containers 140, 160 holding different components A and B which form the plastic mixture, lines transporting different components from the containers to the mixing device, i.e. mixing head, where the components are mixed in order to achieve a homogenous plastic mixture. The transporting lines are lines made of rigid and/or flexible pipes, hoses, connectors, elbows of separators and collectors, which can include transmitting lines, return lines, feeding lines and the like. In accordance with the invention, in at least two lines transporting the components, where at least one component is liquid plastic and which are supplied from the containers 140, 160 assigned to them, there are rate-adjustable pumps 130, 150 generating the flow of the components A, B assigned to each transporting line, the flow meters 133, 153 measuring the volume of each flowing component A, B on a continuous basis, whose indications are sent to the control system 190 regulating the volume of each component flowing to the mixing device where the components in pre-set proportions are mixed in order to achieve a substantially homogenous plastic mixture. Furthermore, it should be noted in the summary that in each line transporting the components A, B, whose volume is measured on a continuous basis, there is established a closed cycle running from the container 140, 160 holding the component A, B assigned to a given transporting line, the pump 130, 150 generating the flow of the component A, B in a given transporting line, the flow meter 133, 153 measuring the volume of the flowing component on a continuous basis, the valve 121, 122 connected to the return line 131, 151, connected to the container 140, 160, redirecting the flow of the component A, B to the container 140, 160 from which the component A, B has been supplied, and at the same time preventing the component A, B from flowing through the transporting line 111, 113 to the mixing device 110, and that in each line transporting the components A, B, whose volume is measured on a continuous basis, there is established an open cycle running from the container 140, 160 holding the component A, B assigned to a given transporting line, the pump 130, 150 generating the flow of the component in the transporting' line, the flow meter 133, 153 measuring the volume of the flowing component A, B on a continuous basis, and the valve 121, 122 connected to the transporting line 111, 113, connected to the mixing device 110, directing, the flow of the component to the, mixing device 110 and at the same preventing the component A, B from flowing to the return line 131, 151, while the container 140, 160 for the component A, B assigned to a given transporting line, the pump 130, 150 generating the flow of the component in the transporting line, the flow meter 133, 153 measuring the volume of the flowing components on a continuous basis, which belong to the closed cycle, are at same time the container 140, 160 for the component assigned to a given transporting line, the pump 130, 150 generating the flow of the component in the transporting line, the flow meter 133, 153 measuring the volume of the flowing component on a continuous basis, in the open cycle. It should be added that the valve 121, 122, connected to the return line 131, 151, and the valve 121, 122, connected to the transporting line 111, 113, connected to the mixing device 110, directing the flow of the component to the mixing device 110 and at the same time preventing the component A, B from flowing to the return line 131, 151 can be the same valve formed as a 3-way valve.

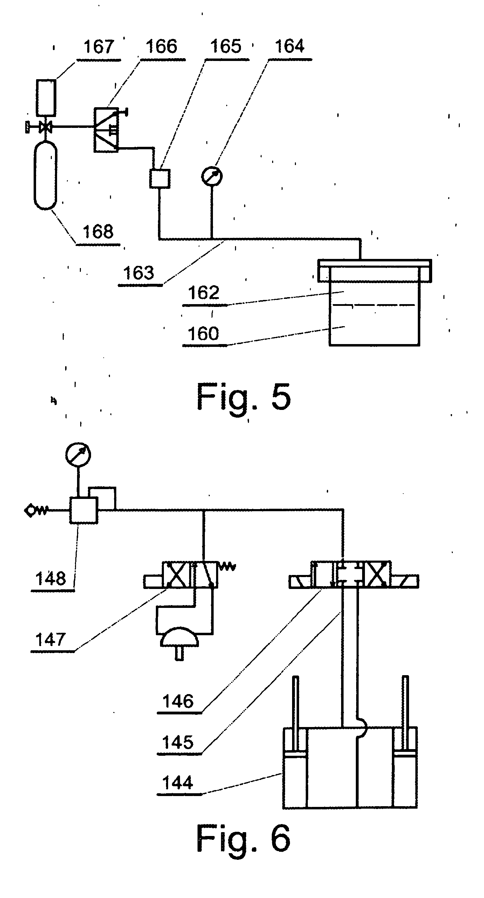

Figure 5 shows the system for preventing the crystalization of the crystalization agent, which can also be used for substances and materials which when brought in contact with air or specific gases form undesirable compounds, in particular, when in liquid plastic solid bodies are formed, which in the case of the curing agent are crystals precipitating as a result of a reaction between compounds having isocyanate group and water molecules from the air. The system preventing the crystallization of the curing agent consists of the air-tight container 160 with the chamber 162, also referred to as the inert-gas cushion, formed over a specific compound, containing inert gas, e.g. nitrogen, preventing the compound from coming into contact with the environment. The container 168 is provided with a set of reducers 167 maintaining constant pressure in the inert-gas installation. The inert-gas chamber 162, installed according to the presented invention over the curing agent, is connected to the inert-gas container 168 via the inert-gas line 163 having the connection valve 166, the control valve 165 and a safety valve. The inert-gas, pressure in the chamber 162 is controlled by means of the manometer 164. As the lines are provided with the system preventing the crystallization of e.g. the curing agent, no precipitation of crystals occurs which could block the flow of a specific mixture component, in particular through the flow meters having ducts of small cross-section and susceptible to congestion.

Figure 6 shows the pneumatic system where compressed air is the energy-conveying medium as it is one of the few environment-friendly materials. Compressed air is generated by the compact compressor 148 with a set of regulators, installed on the device undercarriage. This medium is used first of all to control ball valves by means of compressed-air actuators, to drive the actuators 144 lifting the platform from over the component A drum container, which are connected to the compressor 148 via the transporting lines 145, e.g. rigid and/or flexible pipes, the control valve 146 and the main valve 147. Moreover, the compressed air, in a device according to the invention, is used to clean the mixing head, in particular the mixing chamber and the nozzle, which is presented hereinafter.

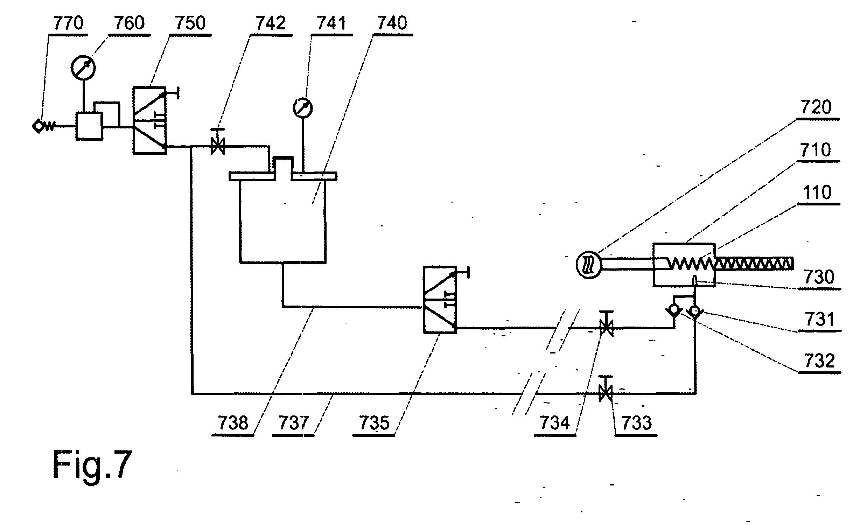

Fig. 7 shows the cleaning system of the device according to the invention, in particular used for cleaning of the mixing head 110, which is related to the bonding characteristics of the components mixed in the device according to the invention. It has now been found that a fundamental problem in the devices used for making mixtures from the components which after having been mixed pass from the liquid to the solid state is to guarantee re-usage of the mixing head parts without having to replace them each time. As a result, it became necessary to clean the area where the components are mixed. Cleaning of this area, according to the invention, involves mainly blowing out, using compressed air, of any excess mixture remaining in the chamber, and then thorough washing, using a specific solution, e.g. solvent, of the elements being in contact with the ready-to-pour mixture. The cleaning process is mechanized by means of special nozzles placed in the mixing chamber. Thus, there is no need to take the head apart to clean the individual elements of the mixing head 110 which considerably accelerates the cleaning process and at the same time reduces the device operation time.

The cleaning system of the device, shown in Fig, 7, consists in particular,of the container 740 holding,the cleaning agent, e.g. solvent, which via the second control solenoid valve 735, cut-off valve 734 and directional valve 732 is connected by means of the flexible hoses 738 and couplers to the cleaning nozzle 730 placed in the mixing head 110. To ensure even feeding of the cleaning agent, the container 740 for the cleaning agent is supplied, from the top, with compressed air from the compressor, the pneumatic system referred to hereinabove, via the quick-connect coupling 770, a set of reducers with the manometer 760, the first control solenoid valve 750 and the safety valve 742. The pressure present in the container 740 holding the cleaning agent is indicated by the control manometer 741. Cleaning of the mixing head 110, placed e.g. inside the protective cover 710, is supported by the compressed air supplied via the compressed-air line 737 with the cut-off valve 733, which at one end is connected, via the directional valve 731, to the cleaning nozzle, and at the other end is connected to the line running from the compressor behind the first control solenoid valve 750. During cleaning, the stirrer can be set in rotational motion by means of the engine 720.

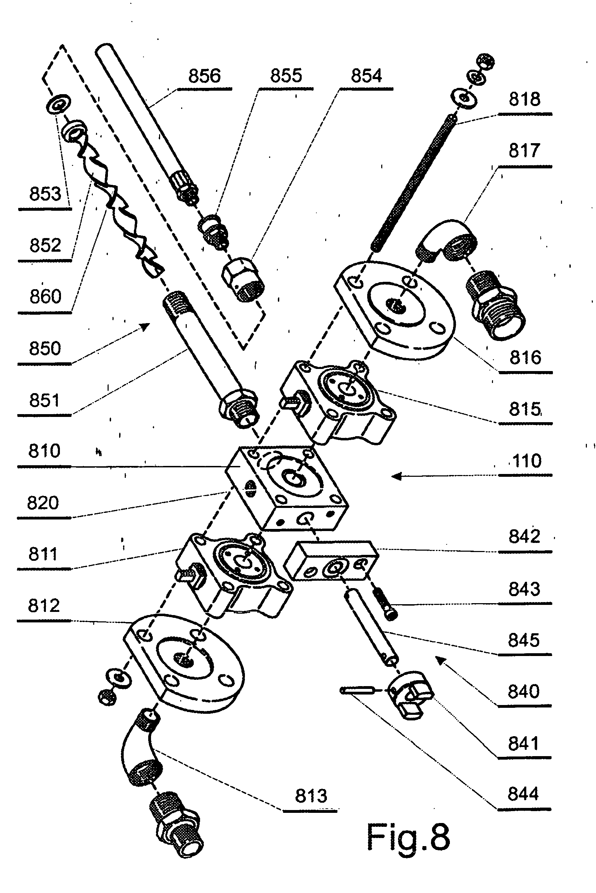

Figure 8 shows the mixing device according to the invention which consists of the mixing head 110, comprising in particular an approximately rectangular protective cover 810 with the pre-mixing chamber to which the mixing system 850, the cut off valves 811, 815 and the power transmission system 840 of the stirrer 860 can be connected. The mixing system 850 consists of the first double-threaded cylinder 851 with the dynamic-mixing chamber which contains the cylindrical slip insert 853 and the rotational stirrer 860 with the segments 852, and, placed behind the dynamic-mixing chamber, the static-mixing chamber, provided in the second cylinder 856 which at one end is terminated with an outlet, through which the plastic mixture is delivered outside, and as the outlet is connected to the static-mixing chamber, the mixing head is also a device supplying the plastic mixture to a pre-determined site. The second cylinder 856 has at its other, end a threaded end that allows connecting it to the first threaded cylinder by means of the connecting piece 855 and the connector 854 with a graded threaded porthole.

The cut-off valves 811, 815 have a substantially rectangular protective cover which supports a cutting-off element which prevents the respective component from flowing to the mixing area comprising the pre-mixing, dynamic-mixing and static-mixing chambers. The cutting-off element can be reset into different positions, either mechanically or ele'ctrically by means of the electromagnetic systems. The cut-off valves 811, 815 are fixed to the protective cover 810 by means of the connecting elements 818 and covers 812, 816 having holes in which the connecting pieces 813, 817 can be screwed in, to which the lines transporting the components A and B are connected.

The rotational stirrer 860 consists of the segments 852 shaped' as rectangular plates whose two opposite edges are inflected towards each other in the planes substantially perpendicular to the axis of the rectangular plate at an angle of about 90°, which is also the rotational axis of the rotational stirrer 850, and the adjoining plates are joined by the edges being in constant contact, while the angle measured in the plane substantially perpendicular to the plate axis between the edges of the adjoining plates is about 90°. The stirrer 860 is terminated with a cylindrical element which slides over the slip insert 853.

Furthermore, the protective cover 810 is connected to the power transmission system 840 which transmits power to the rotational stirrer 860 from the speed-adjustable engine 720, shown in Fig. 7, e.g. an electric, hydraulic or compressed-air engine. The power transmission system 840 consists in particular of the connector 842 mounted to the protective cover 810 by means of the connecting elements 843, the driving shaft 845 having at one end a notch mating with the stirrer 860, and at the other end an opening in which the coupling pin 844 connecting the driving shaft 845 with the clutch 841 can be placed.

The mixing head 110 can be provided with the cleaning nozzle 730 shown in Fig. 7 to which the cleaning agent and compressed air are supplied. The cleaning nozzle can be mounted in the service line 820, to which alternatively an additional transporting line can be connected to supply other components to the device, whose volume can be held constant or regulated as in the case of the components A and B.

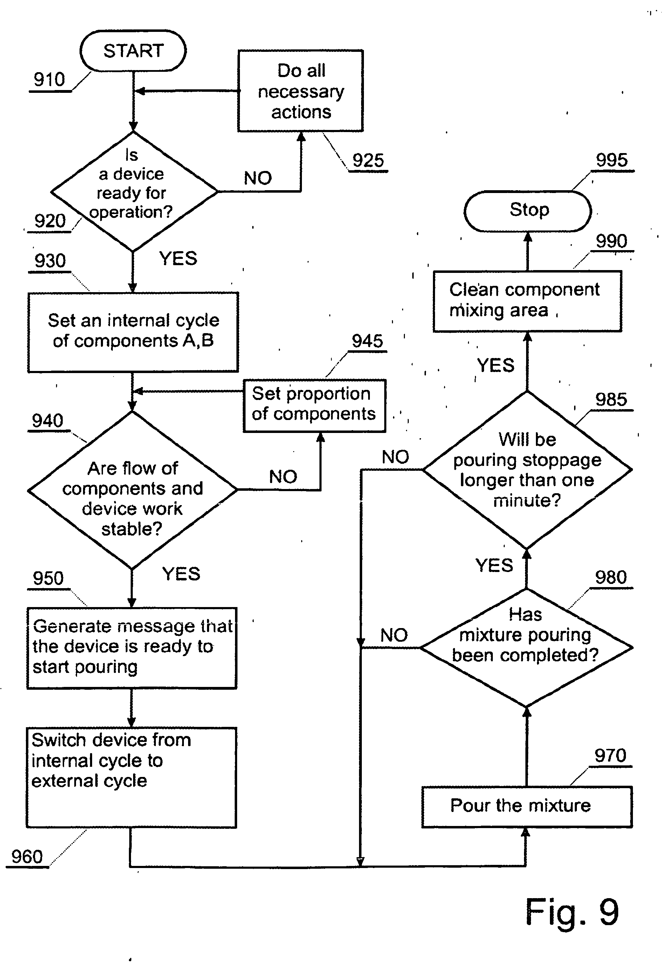

Figure 9 shows a block diagram of the process of preparing plastic mixtures from plastics held in at least two containers with different components of the plastic mixture, supplied via the transporting lines from the containers to the mixing device where the components are mixed in order to achieve a homogeneous plastic mixture. At the moment of start-up 910, all the device subassemblies, necessary for proper operation of the device, are activated, and subsequently in step 920 it is checked if the device is ready for operation. If the monitoring systems indicate incorrect operational status of the device subassemblies, then in step 925 are carried out all necessary auctions to eliminate any defects, whereas, when the device is checked to be fully operational, in step 930 the internal cycle, also referred to as the closed cycle, is activated or established, starting thus the mode for determining the device working parameters and mixture composition in each line transporting the components, whose volume is measured on a continuous basis. The closed cycle can be a cycle running from the container holding the component assigned to a given transporting line. The closed cycle can be established by means of the valve connected to the return line, connected to the container, and redirecting the flow of the component to the container from which the component has been supplied, and at the same time preventing the component from flowing through the transporting line to the mixing device, while using the pump to generate the flow of the component in the transporting line through the flow meter measuring the volume of the flowing component on a continuous basis and, if necessary, adjusting in steps 940, 945 the proportions of the components flowing in a given closed cycle until stable flow of the components of pre defined volumes, resulting from the pre-determined component proportions in the ready-to-pour mixture, is achieved. If the proportions of the components in the mixture correspond to the pre-defined values, then in step 950 is generated a message that the device is ready to start pouring, and subsequently in step 960 the device is switched over from the internal cycle to the external cycle of the components, the so-called open cycle, in which the device is in the operating mode. In step 970 in the operating mode during pouring of the mixture, by means of the valve connected to transporting line, connected to the mixing device, the flow of the component is directed from the container and the pump is used to generate the flow of the component in the transporting line through the flow meter to the mixing device, preventing at the same time the component from flowing to the return line, and monitoring on a continuous basis the flow of the components' of pre-defined volumes, resulting from the pre-determined proportions of the components in the mixture, while the container holding the component assigned to a given transporting line, the pump generating the flow of the component in the transporting line, the flow meter measuring the volume of the flowing component on a continuous basis, which belong to the closed cycle, are also the container holding the component assigned to a given transporting line, the pump generating the flow of the component in the transporting line, the flow meter measuring the volume of the flowing, component on a continuous basis, in the open cycle, in which the component is directed to the mixing device. In step 980 it is checked if the pouring of the mixture is completed, and in step 985 it is checked if the pouring stoppage is going to be longer than a specific time interval, for example one minute. If it is found that the stoppage is going to be longer than the specific time interval, then the step 990 is executed to clean the area where the components are mixed. In the cleaning mode of the mixing device either the pumps generating the flow of the components in the transporting lines are switched off or the internal or closed cycle running from the container holding the component assigned to a given transporting line is re-established or reset by means of the valve connected to the return line, connected to the container, and by means of the pump the component is redirected to the container from which the component has been supplied, and at the same time preventing the component from flowing through the transporting line to the mixing device, and by means of the cut-off valves separates the components from the mixing area, following which the mixing chamber is supplied through the cleaning nozzle with the cleaning agent and compressed air, and the component residues are removed through the outlet of the mixing device. The operating mode is terminated in step 995 after the mixing area or chambers have been cleaned and all device subassemblies have been deactivated.

Unlike the devices known to date, the presented devices provides continuous monitoring of the composition of the ready-to-pour mixture and control of the proportions of the individual components.

The embodiment according to the invention is illustrated on the selected examples of application, however, these examples are not exhaustive with respect to the invention. It is of course possible to introduce modifications without changing the core concept of the invention. The provided examples of application do not exhaust all the possibilities of applying the embodiment according to the invention.

## Claims

1. A device for preparing a plastic mixture comprising at least two containers with different components (A, B), especially epoxide and polyurethane resins as well' as a curing agent, from which the plastic mixture is prepared, and transporting lines transporting different components, and pumps (130, 150) generating flow of the components (A, B) assigned to respective transporting lines transporting separately the components (A, B), taken from assigned containers (140, 160), where at least one of the components (A, B) is a plastic component, to a mixing device where the components are mixed into homogeneous plastic mixture and their flow is controlled by a control system, **characterized in that** the pumps (130, 150) generating flow of the components (A, B) are rate-adjustable pumps (130, 150) generating flow of the components (A, B) assigned to respective transporting lines with flow meters (133, 153) measuring continuously volume of each flowing component (A, B), wherein indications of flow meters (133, 153) are inputs of the control system (190) adjusting the volume of each component and/or volumetric ratios of said components delivered to the mixing device in which the components of predetermined proportions are mixed in order to achieve a substantially homogenous plastic mixture.

2. The device according to claim 1, **characterized in that** the mixing, device comprises a mixing head (110) with a dynamic-mixing chamber provided with a rotational stirrer (860), and a static-mixing chamber, placed behind the dynamic-mixing chamber, terminated with an outlet of the plastic mixture.

3. The device according to claim 1 or 2, **characterized in that** each line transporting the components (A, B) with volume measured continuously by the flow meters (133, 153) is provided with a switching valve (121, 122) redirecting flow of the respective component (A, B) in an internal cycle to the assigned container (140, 160) after measurement the flow by the respective flow meter (133, 153) and preventing the respective component from flowing to the mixing device.

4. The device according to claim 1, 2 or 3, **characterized in that** the control system (190) is able to detect stabilised parameters of the mixture composition and is able to switch flow of the components from the internal cycle into an external cycle if conditions for proper operation and correct proportions of the components are reached and is able to adjust the flow of the components (A, B) in respect to pre-set volumetric or weight ratios of the components in the plastic mixture.

5. The device according to claim 1, 2, 3 or 4, **characterized in that** in each line transporting the components (A, B), with volume measured continuously, the device elements constitute either the internal cycle or the external cycle, each one leading respective component (A, B) from the respective container (140, 160) through the pump (130, 150) generating flow of the component (A, B) in the transporting line, the flow meter (133, 153) measuring continuously volume of flowing components, to the switching valve (121, 122), where in the internal cycle the switching valve (121, 122) is connected to the return line (131, 151), leading to the same container (140, 160) and redirecting flow of the component (A, B) back to respective container (140, 160) thus preventing the component (A, B) from flowing through the feeding line (111, 113) to the mixing device (110), and where in the external cycle the valve (121, 122) is connected to the transporting line (111, 113), leading to the mixing device (110) and directing flow of the component to the mixing device (110) thus preventing the respective component (A, B) from flowing to the respective return line (131, 151).

6. The device according to claim 1, 2, 3 or 4, **characterized in that** in each line transporting the components (A, B), whose volume is continuously measured, is established an internal cycle, running from the container (140, 160) with the respective component (A, B) assigned to a given transporting line, the pump (130, 150) generating the flow of the component (A. 8) in the transporting line the flow meter (133,153) continuously measuring the volume of the flowing component, the valve (121, 122), connected to the return line (131, 151), connected to the container (140, 160), redirecting the flow of the component (A, B) back to the container (140, 160) from which the component (A, B) has been taken and at the same time preventing the component (A, B) from flowing through the feeding line (111, 113) to the mixing device (110), and that in each line transporting the components (A, B), whose volume is continuously measured, there is established an external cycle, running from the container (140, 160) holding the component (A, B) assigned to a given transporting line, the pump (130, 150) generating the flow of the component (A, B) in the transporting line, the flow meter (133. 153) measuring the volume of the flowing component (A, B) on a continuous basis, and the valve (121, 122) connected to the transporting line (111, 113), connected to the mixing device (110), directing the flow of the component to the mixing device (110) and at the same time preventing the component (A, B) from lowing to the return line (131, 151), while the container (140, 160) holding the component (A, B) assigned to a given transporting line, the pump (130, 150) generating the flow of the component in the transporting line, the flow meter (133, 153) measuring the volume of the flowing component on a continuous basis, which belong to the closed cycle, are also the container (140, 160) holding the component assigned to a given transporting line, the pump (130, 150) generating the flow of the component in the transporting line, the flow meter (133, 153) measuring the volume of the flowing component on a continuous basis, in the open cycle.

7. The device according to claim 2, 3, 4, 5 or 6, **characterized in that** the rotational stirrer (860) is powered by a speed-adjustable motor.

8. The device according to claim 2, 3, 4, 5 or 6, **characterized in that** the rotational stirrer (860) is formed from segments (852) in form of rectangular plates twisted around the axis of rotation of the rotational stirrer (860) by 90° and bound by their edges perpendicular to the axis of rotation of the rotational stirrer (860), with coinciding edges of neighbouring segments inclined one to another by 90° in a plane perpendicular to the axis of rotation of the rotational stirrer (860).

9. The device according to claim 2, 3, 4, 5, 6 or 7, **characterized in that** the mixing head (110) is provided with the cleaning nozzle (730) supplied with a cleaning agent and compressed air.

10. The device according to claim 2, 3, 4, 5, 6, 7 or 8, **characterized in that** the mixing head is provided with the valves (811, 815) preventing the components (A, B) from flowing into the mixing zone.

11. The device according to one of preceding claims **characterized in that** in an inner of at least one of the containers (160) with the components (B) is formed a chamber (162) filled with an inert gas preventing the component (B) to come into contact with the environment.

12. The device according to any of preceding claims **characterized in that** the mixing device is also a device supplying the plastic mixture to a pre-determined site.

13. A method for preparing a plastic mixture from components, especially epoxide and polyurethane resins as well as a curing agent, held in at least two containers with different plastic components, from which at least one is a liquid plastic, supplied through at least two transporting lines where flow of the component (A, B) assigned to each transporting line is generated by a pump (130, 150) from containers to a mixing device where the components are mixed into substantially homogeneous plastic mixture and their flow is controlled by a control system, **characterized in that** the flow of the component (A, B) assigned to each transporting line is generated by a rate-adjustable pump (130, 150) and volume of each flowing component (A, B) is measured continuously by flow meters (133, 153) whose, indications are input to the control system (190) providing real-time regulation of volume of each component and/or regulation of volumetric ratios of said components delivered to the mixing device where the components supplied in pre-set volumes are mixed into substantially homogenous, ready-to-pour plastic mixture of pre-set volumetric or weight ratios of the components.

14. The method according to claim 13, **characterized in that** in a stabilising mode to determine device working parameters and the mixture composition, in, each line transporting the components (A, B) whose volume is measured continuously an internal cycle is set leading from the container (140, 160) with a respective component (A, B) assigned to a given transporting line, connected by the valve (121, 122) to the return line (131, 151) connected to the respective container (140, 160), and the component (A, B) is redirected to the container (140, 160) from which it has been previously taken, and at the same time the component (A, B) is prevented from flowing through the transporting line (111, 113) towards the mixing device (110), and the pump (130, 150) generates flow of the respective component (A, B) in the transporting line through a flow meter (133, 153) measuring continuously volume of the respective component, regulating at the same time the ratio of the components flowing in the internal cycle until stabilised flow of the components of pre-set volumes, resulting from pre-set proportions of the components in the ready-to-pour mixture is achieved, and subsequently in an operating mode, the component (A, B) is directed from the container (140, 160) through the transporting line (111, 113), and further by the valve (121, 122) towards the mixing device (110), whereas the pump (130, 150) generates flow of the component (A, B) in the transporting line through the flow meter (133, 153) towards the mixing device (110), and the component (A, B) is at the same time prevented from flowing to the return line (131, 151), and thus the flow, of the components of pre-set volumes, resulting from pre- set ratio of the components in the mixture, is continuously monitored whereas the container (140, 160) with the component (A, B), assigned to the given transporting line, the pump (130, 150) generating flow of the components in the respective transporting lines, the flow meter (133, 153) measuring continuously volume of flowing component belong to both the internal cycle and the external cycle, while in the latter the component is directed towards the mixing device.

15. The method according to claim 13, **characterized in that** during cleaning of the mixing device, either the pumps generating flow of the components in the transporting lines are shut off or the internal cycle leading from the container (140, 160) holding the component (A, B) assigned to a given transporting line by the valve (121, 122) connected to the return line (131, 151) connected to the container (140, 160), is reset and the component (A, B) is redirected, by means of the pump (130, 150), to the container (140, 160) from which the component (A, B) has been previously taken, and at the same time the component (A, B) is prevented from flowing through the transporting line (111, 113) to the mixing device (110) and the components are prevented, by means of the cut-off valves (811, 815), from flowing to the mixing zone, and subsequently, the mixing chamber is supplied, via the cleaning nozzle (730), with the cleaning agent and compressed air and thus the component residues are removed through the outlet in the mixing device together with the cleaning agent and compressed air.

## Patentansprüche

1. Eine Vorrichtung zur Herstellung der Mischung der Kunststoffe, bestehend aus mindestens zwei Behältern für verschiedene Bestandteile (A, B), insbesondere Epoxidharze und Polyurethane, sowie für Härter, mit Transportlinien zur Beförderung der Bestandteile und mit Pumpen (130, 150), die die Strömung von Bestandteilen (A, B) in den Transportlinien einzeln aufzwingen, wobei mindestens eines der Bestandteile (A, B) ein Kunststoff ist und die von den ihnen zugewiesenen Behältern (140, 160) in die Mischanlage entnommen und zu einer homogenen Mischung verarbeitet werden, wobei der Durchfluss der Bestandteile (A, B) von einem Steuersystem reguliert wird, **dadurch gekennzeichnet, dass** unter Anwendung die die Strömung aufzuzwingenden Pumpen (130, 150), die mit regulierbarer Ausgabe sind und die die Einstellung der Strömungsstärke in entsprechenden Transportlinien für die Beförderung der Bestandteile regulieren und deren Durchflussmessgeräte (133, 153) durchlaufend das Volumen der durchströmenden Bestandteile (A, B) messen, wobei die Angaben der Durchflussmessgeräte (133, 153) an das Steuerungssystem (190) übertragen werden und dieses das Volumen des einzelnen Bestandteiles oder deren Volumenverhältnisse entsprechend einstellt, damit die Bestandteile in die Mischvorrichtung nach vorher genau abgestimmten Verhältnissen gelangen und zu einer homogenen Kunststoffmischung verarbeitet werden können.

2. Die Vorrichtung nach Anspruch 1, **dadurch gekennzeichnet, dass** die Mischvorrichtung ein Mischkopf (110) ist, der mit einer mit einem Rotationsrührer (860) zum dynamischen Mischen ausgestatteten Kammer und mit einer zum statischen Mischen hinter der dynamischen Kammer angeordneten Kammer ausgestattet ist, wobei die zum statischen Mischen vorgesehene Kammer eine Auslassöffnung für die Kunststoffmischung hat.

3. Die Vorrichtung nach einem der Ansprüche 1 oder 2, **dadurch gekennzeichnet, dass** jede Transportlinie für die Übergabe der Bestandteile (A, B) mit Durchflussmessgeräte (133, 153), die durchgehend das Volumen messen, mit einem Umschaltventil (121, 122) ausgerüstet wird, das nach einer durch einen entsprechenden Durchflussmessgerät (133, 153) ausgeführten Messung die Strömung eines entsprechenden Bestandteils (A, B) im inneren Kreislauf in einen bestimmten Behälter (140, 160) umleitet und den Einlass in den Mischvorrichtung für ein entsprechendes Bestandteil sperrt.

4. Die Vorrichtung nach einem der Ansprüche 1, 2 oder 3, **dadurch gekennzeichnet, dass** das Steuersystem (190) imstande ist, die Stabilisierungsparameter von der Zusammensetzung der Mischung zu ermitteln und die Strömung der Bestandteile vom Innenkreislauf in den Außenkreislauf umzuleiten, wenn die nötigen Bedingungen für den korrekten Betrieb und ein entsprechendes Bestandteilverhältnis erreicht werden, und auch den Durchfluss der Bestandteilen (A, B) nach den vorgegebenen Volumen- oder Gewichtsverhältnissen der Bestandteile in der Kunststoffmischung anzupassen.

5. Die Vorrichtung nach einem der Ansprüche 1, 2, 3 oder 4, **dadurch gekennzeichnet, dass** in jeder Transportlinie für die Beförderung der Bestandteile (A, B), in der das Durchflussvolumen ständig gemessenen wird, die Anlagenelemente einen Innen- oder Außenkreislauf für die Beförderung eines bestimmten Bestandteils (A, B) aus einem bestimmten Behälter (140, 160) über der Pumpe (130, 150) für die aufzuzwingende Strömung in der Transportlinie für die Beförderung der Bestandteile (A, B) und über dem die ständigen Messungen durchführenden Durchflussmessgeräten (133, 153) bis zum Umschaltventil (121, 122) bilden, wobei der Umschaltventil im Falle des inneren Kreislaufs an die Rückführungsleitung (131, 151) angeschlossen ist und das Bestandteil (A, B) wieder zu demselben Behälter (140, 160) leitet und verhindert, dass das Bestandteil (A, B) über die Beförderungslinie (111, 113) in den Mischkopf (110) gelangt, wobei das Umschaltventil (121, 122) im Falle des Außenkreislaufs an die Transportlinie (111, 113) für die Beförderung der Bestandteile an den Mischkopf (110) angeschlossen ist und die Strömung der Bestandteile in den Mischkopf (110) leitet, wobei verhindert wird, dass die Bestandteile (A, B) in eine entsprechende Rücklaufleitung (131, 151) gelangen.

6. Die Vorrichtung nach einem der Ansprüche 1, 2, 3 oder 4 **dadurch gekennzeichnet, dass** in jeder Transportlinie für die Beförderung der Bestandteile (A, B), mit dem ständig gemessenen Durchflussvolumen, ein Innenkreislauf gebildet wird, der vom Behälter (140, 160), für ein einer entsprechenden Transportlinie zugewiesenes entsprechendes Bestandteil (A, B), mit Pumpe (130, 150) für den aufzuzwingenden Durchfluss der Bestandteile (A, B) in dieser Transportlinie, mit Durchflussmessgerät (133, 153) durchgehend gemessenen Bestandteilvolumen bis zu dem an die Rücklaufleitung (131, 151) angeschlossenen Umschaltventil (121, 122), das die Bestandteile (A, B) zurück zum Behälter (140, 160) leitet, von welchem die Bestandteile (A, B) entnommen wurden, und gleichzeitig den Durchfluss der Bestandteile (A, B) durch die Versorgungsleitungen (111, 113) zum Mischbehälter (110) verhindert, wobei in jeder Transportlinie für die Beförderung des Bestandteils (A, B), mit der ständigen Messung des Durchflussvolumens, ein Außenkreislauf entsteht, wobei der Außenkreislauf für ein einer entsprechenden Transportlinie zugewiesenes Bestandteil (A, B) aus dem Behälter (140, 160) mit dem Bestandteil (A, B), zugewiesen einer bestimmten Transportlinie, aus der Pumpe (130, 150), die den Durchfluss des Bestandteils (A, B) durch die Transportlinie erzwingt, aus Durchflussmessgerät (133, 153) für die ständige Messung des Durchflussvolumens des Bestandteils (A, B) bis zu dem an die Versorgungsleitung (111, 113) die Strömung in Richtung des umleitenden Mischkopfes (110) angeschlossenen Umschaltventil (121, 122) besteht, das gleichzeitig verhindert, dass die Bestandteile (A, B) in die Rücklaufleitung (131, 151) gelangen, während der der bestimmten Transportlinie zugewiesene Behälter (140, 160) mit dem Bestandteil (A, B), die den Durchfluss des Bestandteils erzwingende Pumpe (130, 150), der Durchflussmessgerät (133, 153), zum durchgehenden Messen des Durchflusses des Bestandteils, zum geschlossenen Kreislauf gehören und gleichzeitig den offenen Kreislauf darstellen, wobei der offene Kreislauf aus dem Behälter (140, 160) mit dem dieser Linie zugewiesenen Bestandteil, mit der Pumpe (130, 150) die den Durchfluss des Bestandteils erzwingt, und aus dem Durchflussmessgerät (133, 153) zum durchgehenden Messen des Durchflussvolumens des Bestandteils besteht.

7. Die Vorrichtung nach einem der Ansprüche 2, 3, 4, 5 oder 6, **dadurch gekennzeichnet, dass** der Rotationsrührer (860) mit einem Motor mit einstellbarer Betriebsgeschwindigkeit angetrieben wird.

8. Die Vorrichtung nach einem der Ansprüche 2, 3, 4, 5 oder 6, **dadurch gekennzeichnet, dass** der Rotationsrührer (860) aus Segmenten (852) in Form von mit um die Achse des Rotationsrührers (860) um 90° zueinander gedrehten Rändern rechteckigen Platten besteht, wobei die Platten an den um 90° in der zu der Drehachse des Rotationsrührers (860) rechteckigen angeordneten Fläche zueinander gedrehten Plattenrändern verbunden sind.

9. Die Vorrichtung nach einem der Ansprüche 2, 3, 4, 5, 6 oder 7, **dadurch gekennzeichnet, dass** der Mischkopf (110) mit einer Reinigungsdüse (730) ausgestattet ist, die mit Reinigungsmittel und Pressluft versorgt wird.

10. Die Vorrichtung nach einem der Ansprüche 2, 3, 4, 5, 6, 7 oder 8, **dadurch gekennzeichnet, dass** der Mischkopf mit Ventilen (811, 815) ausgestattet wird, die verhindern, dass die Bestandteile (A, B) in die Mischzone gelangen.

11. Die Vorrichtung nach einem der obigen Ansprüche, **dadurch gekennzeichnet, dass** in mindestens einem der Behälter (160) mit Bestandteilen (B) eine mit neutralem Gas gefüllte Kammer (162) gebildet wird, die den Kontakt des Bestandteils (B) mit der Umgebung verhindert.

12. Die Vorrichtung nach einem der obigen Ansprüche, **dadurch gekennzeichnet, dass** die Mischanlage gleichzeitig eine Anlage für die Beförderung der Kunststoffmischung an eine vorgeplante Stelle ist.

13. Ein Verfahren zur Herstellung einer Kunststoffmischung aus Komponenten, insbesondere aus Epoxid- und Polyurethan-Harzen sowie aus Härtern, die in mindestens zwei Behältern gehalten werden, von denen mindestens einer ein flüssiger Kunststoff ist, mit Hilfe von mindestens zwei Transportlinien, mit einer Pumpe (130, 150) für die Erzwingung der Strömung der Bestandteile vom Behälter bis zu der Mischvorrichtung geleitet werden, in der die Bestandteile zu einer homogenen Kunststoffmischung verarbeitet werden, und deren Durchfluss von dem Steuerungssystem kontrolliert wird, **dadurch gekennzeichnet, dass** unter Anwendung von Pumpen (130, 150), die die Einstellung der Strömung der Komponente (A, B) in entsprechend zugewiesenen Transportlinien erzwingen und mit einem Durchflussmessgerät (133, 153) zum durchgehenden Messen des Durchflussvolumens des Bestandteils (A, B), wobei die Messwerte von den Durchflussmessgeräten (133, 153) an das Steuersystem (190) übertragen werden, so dass in Echtzeit die Einstellung des Durchflussvolumens der einzelnen Komponenten und/oder die Einstellung des Volumenverhältnisses dieser Komponenten, die in die Mischvorrichtung übergeben werden, durchgeführt werden kann, wobei in der Mischvorrichtung die Elemente, in einer vorgegebenen Menge geliefert und zu einer einheitlichen, gießfertigen, nach vorgegebenen Volumen- oder Gewichtsverhältnissen Kunststoffmischung verarbeitet werden.

14. Das Verfahren nach Anspruch 13, **dadurch gekennzeichnet, dass** im Stabilisierungsbetrieb, um die Arbeitsparameter der Anlage und die Zusammensetzung des Gemisches in jeder der Transportlinien für die Komponente (A, B) zu bestimmen, der Innenkreislauf mit der durchgehenden Volumenmessung vom Behälter (140, 160) mit einem entsprechenden einer entsprechenden Transportlinie zugewiesenen Bestandteil (A, B) gebildet wird, der durch ein Ventil (121, 122) mit der Rücklaufleitung (131, 151) verbunden ist, die das Bestandteil (A, B) zu einem entsprechenden Behälter (140, 160) umleitet, von dem er zuvor entnommen wurde, und gleichzeitig wird verhindert, dass das Bestandteil (A, B) in die Versorgungsleitung (111, 113) in der Richtung des Mischkopfes (110) strömt, wobei die Pumpe (130, 150) die Strömung des Bestandteils (A, B) in der Transportleitung über den Durchflussmessgerät (133, 153), mit durchgehender Volumenmessung der Strömung, und Anpassung des Verhältnisses von Bestandteilen im inneren Kreislauf erzwingt, bis zu dem Zeitpunkt, wenn der Durchlauf der Bestandteile nach vorgegebenem Volumen, nach für eine herstellungsfertige Mischung vorab festgelegtem Bestandteilverhältnis erreicht ist, und wobei im Arbeitsbetrieb das Bestandteil (A, B) vom Behälter (140, 160) über die Transportleitung (111, 113) durch das Ventil (121, 122) in Richtung der Mischkopf (110) geleitet wird, während die Pumpe (130, 150) den Durchfluss des Bestandteils (A, B) in der Transportleitung, über dem Durchflussmessgerät (133, 153) in den Mischkopf (110) erzwingt, und gleichzeitig verhindert wird, dass das Bestandteil (A, B) in die Rückflussleitung (131, 151) eindringt und der Fluss von Komponenten mit einem vorgegebenen Volumen nach dem vorab festgelegten Verhältnis der Bestandteile in der Mischung kontinuierlich überwacht wird, während der einer der Transportleitung zugeordnete Behälter (140, 160) mit dem Bestandteil (A, B), die die Strömung der Bestandteile in den entsprechenden Transportlinien erzwingende Pumpe (130, 150) und der Durchflussmessgerät (133, 153) mit der durchgehenden Volumenmessung der Strömung der Bestandteile sowohl zu dem inneren als auch dem äußeren Kreislauf gehören, in dem der Bestandteil in die Mischvorrichtung geleitet wird.

15. Das Verfahren nach Anspruch 13, **dadurch gekennzeichnet, dass** während der Reinigung des Mischkopfes die den Fluss der Bestandteile in den Transportlinien zwingenden Pumpen abgeschaltet werden, oder der innere, vom Behälter (140, 160) führende Kreislauf einer bestimmten zugewiesenen Transportlinie mit dem Bestandteil (A, B) gebildet wird, über das das Bestandteil (A, B) mit der Rücklaufleitung (131, 151) verbundene Ventil (121, 122) zum Behälter (140, 160) mit Hilfe der Pumpe (130, 150) in den Behälter (140, 160) umgeleitet wird, von dem es bereits entnommen wurde, gleichzeitig wird die Strömung des Bestandteils (A, B) vor dem Eindringen in die zur Mischvorrichtung (110) führenden Transportlinien (111, 113) durch die Sperrventile (811, 815) verhindert, und weiter über die Reinigungsdüse (730) in die Mischkammer ein Reinigungsmittel und die Druckluft eingeführt werden, um die Reinigung durchzuführen und die Bestandteilreste über die Auslassöffnung in der Mischanlage mit dem Reinigungsmittel und Druckluft zu entfernen.

## Revendications

1. Un dispositif pour préparer un mélange de matières plastiques comprenant au moins deux réservoirs avec des composants différents (A, B), notamment des résines époxy et polyuréthane ainsi qu'un agent de durcissement, à partir desquels le mélange plastique est préparé et des lignes de transport transportant différents composants, ainsi que des pompes (130, 150) générant le flux des composants (A, B) affectés à des lignes de transport respectives transportant séparément les composants (A, B), prélevées des réservoirs affectés (140, 160), dont au moins un des composants (A, B) est un composant plastique, à un dispositif mélangeur où les composants sont mélangés en un mélange de plastique homogène et leur débit est contrôlé par un système de contrôle, **caractérisé en ce que** les pompes (130, 150) générant un flux des composants (A, B) sont des pompes (130, 150) à vitesse réglable générant un flux des composants (A, B) affectés à des lignes de transport respectives avec des débitmètres (133, 153) mesurant en continu le volume de chaque composant (A, B) transporté, où les indications des débitmètres (133, 153) sont entrées au système de contrôle (190) réglant le volume de chaque composant et / ou les rapports volumétriques de ces composants livrés au dispositif mélangeur dans lequel les composants sont mélangés en proportions prédéterminées afin d'obtenir un mélange plastique sensiblement homogène.

2. Le dispositif selon la revendication 1, **caractérisé en ce que** le dispositif mélangeur comprend une tête de mélange (110) avec une chambre de mélange dynamique munie d'un agitateur rotatif (860), et une chambre de mélange statique, placée derrière la chambre de mélange dynamique, terminée par une sortie du mélange des matières plastiques.

3. Le dispositif selon la revendication 1 ou 2, **caractérisé en ce que** chaque ligne de transport des composants (A, B) avec un volume mesuré en permanence par les débitmètres (133, 153) est munie d'une valve (121, 122) dirigeant le flux du composant respectif (A, B) dans un cycle interne au réservoir (140, 160) affecté après la mesure du débit par le débitmètre respectif (133, 153) et prévenant le composant respectif de s'écouler vers le dispositif mélangeur.

4. Le dispositif selon la revendication 1, 2 ou 3, **caractérisé en ce que** le système de contrôle (190) est capable de détecter les paramètres stabilisés de la composition du mélange et est capable de commuter le flux des composants du cycle interne au cycle externe si les conditions de propre fonctionnement et de correctes proportions des composants sont atteintes et est capable de régler le flux des composants (A, B) conformément aux rapports volumétriques ou pondéraux des composants prédéfinis dans le mélange plastique.

5. Le dispositif selon la revendication 1, 2, 3 ou 4, **caractérisé en ce que** dans chaque ligne transportant les composants (A, B) avec un volume mesuré en continu, les éléments du dispositif constituent soit le cycle interne soit le cycle externe, chacun conduisant le composant respectif (A, B) du réservoir respectif (140, 160) à travers la pompe (130, 150) générant un flux du composant (A, B) sur la ligne de transport, le débitmètre (133, 153) mesurant en continu le volume des composants transportés, à la valve (121, 122), où dans le cycle interne la valve (121, 122) est reliée à la conduite de retour (131, 151), conduisant au même réservoir (140, 160) et redirigeant le flux du composant (A, B) en arrière vers le réservoir respectif (140, 160) ce qui empêche le composant (A, B) de circuler à travers la ligne d'alimentation (111, 113) vers le dispositif mélangeur (110), et où dans le cycle externe la valve (121, 122) est liée à la ligne d'alimentation (111, 113), menant au dispositif mélangeur (110) et dirigeant le flux du composant vers le dispositif mélangeur (110) empêchant ainsi le composant respectif (A, B) de circuler vers la conduite de retour respective (131, 151).

6. Le dispositif selon la revendication 1, 2, 3 ou 4 **caractérisé en ce que** dans chaque ligne transportant les composants (A, B), dont le volume est mesuré en continu, est mis en place un cycle interne, allant du réservoir (140, 160) avec le composant respectif (A, B) affecté à une ligne de transport donnée, la pompe (130, 150) générant le flux du composant (A, B) sur la ligne de transport, le débitmètre (133, 153) mesurant en continu le volume du composant transporté, la valve (121, 122) connectée à la conduite de retour (131, 151), connectée au réservoir (140, 160), redirigeant le flux du composant (A, B) en arrière vers le réservoir (140, 160) d'où un composant (A, B) a été prélevé et en même temps empêchant le composant (A, B) de circuler à travers la ligne d'alimentation (111, 113) vers le dispositif mélangeur (110), et que dans chaque ligne transportant les composants (A, B), dont le débit est mesuré de façon continue, est établi un cycle externe, allant du réservoir (140, 160) contenant le composant (A, B) affecté à une ligne de transport donnée, la pompe (130, 150) générant le flux du composant (A, B) sur la ligne de transport, le débitmètre (133, 153) mesurant en continu le volume du composant (A, B) transporté, et la valve (121, 122) connectée à la ligne de transport (111, 113), connectée au dispositif mélangeur (110), dirigeant le flux du composant vers le dispositif mélangeur (110) et en même temps empêchant le composant (A, B) de circuler vers la conduite de retour (131, 151), tandis que le réservoir (140, 160) contenant le composant (A, B) affecté à une ligne de transport donnée, la pompe (130, 150) générant le flux du composant sur la ligne de transport, le débitmètre (133, 153) mesurant le débit du composant d'une façon constante, qui appartient au cycle fermé, ce sont aussi le réservoir (140, 160) contenant le composant affecté à une ligne de transport donnée, la pompe (130, 150) générant le flux du composant sur la ligne de transport, le débitmètre (133, 153) mesurant le débit du composant transporté d'une façon constante, dans le cycle ouvert.

7. Le dispositif selon la revendication 2, 3, 4, 5 ou 6, **caractérisé en ce que** l'agitateur rotatif (860) est alimenté par un moteur à vitesse réglable.

8. Le dispositif selon la revendication 2, 3, 4, 5 ou 6, **caractérisé en ce que** l'agitateur rotatif (860) est constitué de segments (852) en forme de plaques rectangulaires tordues autour de l'axe de rotation de l'agitateur rotatif (860) à un angle de 90 degrés et liées par leurs bords perpendiculaires à l'axe de rotation de l'agitateur rotatif (860) de telle sorte que les bords coïncidant des segments voisins sont inclinés l'un vers l'autre à un angle de 90 degrés dans un plan perpendiculaire à l'axe de rotation de l'agitateur rotatif (860).

9. Le dispositif selon la revendication 2, 3, 4, 5, 6 ou 7, **caractérisé en ce que** la tête de mélange (110) est équipée d'une buse de nettoyage (730) munie avec un agent nettoyant et l'air comprimé.

10. Le dispositif selon la revendication 2, 3, 4, 5, 6, 7 ou 8 **caractérisé en ce que** la tête de mélange est équipée de vannes (811, 815) empêchant les composants (A, B) de circuler vers la zone de mélange.

11. Le dispositif selon l'une des revendications précédentes, **caractérisé en ce que** à l'intérieur d'au moins un des réservoirs (160) avec les composants (B) est formé une chambre (162) remplie d'un gaz inerte empêchant le composant (B) d'entrer en contact avec l'environnement.

12. Le dispositif selon une quelconque des revendications précédentes **caractérisé en ce que** le dispositif mélangeur est également un dispositif d'alimentation du mélange de plastique au site prédéterminé.

13. Une méthode de préparation d'un mélange de matières plastiques à partir des composants, notamment des résines époxy et polyuréthane ainsi que d'un agent de durcissement, stockés dans au moins deux réservoirs avec différents composants plastiques dont un au moins est une matière plastique liquide, transportés par au moins deux lignes de transport où le flux du composant (A, B) attribué à chaque ligne de transport est généré par une pompe (130, 150) à partir des réservoirs vers un dispositif mélangeur où les composants sont mélangés en un mélange plastique sensiblement homogène et leur débit est contrôlé par un système de contrôle, **caractérisé en ce que** le flux du composant (A, B) attribué à chaque ligne de transport est généré par une pompe (130, 150) à vitesse réglable et le volume de chaque composant (A, B) transporté est mesuré en permanence par des débitmètres (133, 153) et dont les indications sont entrées dans le système de contrôle (190) assurant une régulation en temps réel du volume de chaque composant et/ou la régulation des rapports volumétriques de ces composants conduits vers le dispositif mélangeur où les composants fournis dans les volumes prédéfinis sont mélangés en un mélange de matières plastiques sensiblement homogène, prêt à la coulée, avec des rapports volumétriques ou pondéraux des composants prédéfinis.

14. La méthode selon la revendication 13, **caractérisée en ce que** dans un mode de stabilisation afin de déterminer les paramètres de travail du dispositif et la composition du mélange, dans chaque ligne transportant le composant (A, B) dont le volume est mesuré en permanence un cycle interne est établi allant du réservoir (140, 160) avec un composant (A, B) respectif attribué à une ligne de transport donnée, connectée par une valve (121, 122) à la conduite de retour (131, 151) connectée au réservoir (140, 160) respectif, et le composant (A, B) est redirigé vers le réservoir (140, 160) à partir duquel il a été prélevé avant, et en même temps le composant (A, B) est empêché de circuler à travers la ligne d'alimentation (111, 113) vers le dispositif mélangeur (110), et la pompe (130, 150) génère le flux du composant (A, B) respectif sur la ligne de transport, à travers du débitmètre (133, 153) mesurant en continu le volume du composant respectif, réglant dans le même temps le rapport des composants circulant dans le cycle interne jusqu'à ce que le débit stabilisé des composants des volumes prédéfinis, résultant de proportions prédéfinis des composants dans le mélange prêt à la coulée soit atteint, et par la suite dans un mode de fonctionnement, le composant (A, B) est dirigé du réservoir (140, 160) à travers la ligne d'alimentation (111, 113), et ensuite vers la valve (121, 122) vers le dispositif mélangeur (110), lorsque la pompe (130, 150) génère le flux du composant (A, B) respectif sur la ligne de transport, à travers du débitmètre (133, 153) jusqu'à l'appareil mélangeur (110), et le composant (A, B) est dans le même temps empêché de s'écouler vers la conduite de retour (131, 151), et donc le flux des composants des volumes prédéfinis, résultant du rapport prédéfini des composants dans le mélange, est surveillée en permanence alors que le réservoir (140, 160) avec le composant (A, B) affecté à une ligne de transport spécifique, la pompe (130, 150) générant le flux du composant sur les lignes de transport respectives, le débitmètre (133, 153) mesurant en continu le volume des composants transportés appartiennent à la fois au cycle interne et au cycle externe, tandis que dans le second le composant est dirigé vers le dispositif de mélange.

15. La méthode selon la revendication 13, **caractérisée en ce que** lors du nettoyage du dispositif mélangeur, soit les pompes générant le flux des composants dans les lignes de transport sont débranchées soit le cycle interne menant à partir du réservoir (140, 160) contenant le composant (A, B) affecté à une ligne de transport donnée, à travers la valve (121, 122) connectée à la conduite de retour (131, 151) connectée au réservoir (140, 160), est re-installé et le composant (A, B) est redirigé par la pompe (130, 150) vers le réservoir (140, 160) d'où le composant (A, B) a été auparavant prélevé, et en même temps le composant (A, B) est empêché de circuler à travers la ligne d'alimentation (111, 113) vers le dispositif mélangeur (110) et les composants sont empêchés, par moyen des valves d'arrêt (811, 815), de s'écouler vers la zone de mélange, et par la suite, la chambre de mélange est alimentée, via la buse de nettoyage (730), par l'agent nettoyant et l'air comprimé et subséquemment les résidus des composants sont évacués par la sortie dans le dispositif mélangeur avec l'agent nettoyant et l'air comprimé.
